(19) Europäisches Patentamt
European Patent Office
Office européen des brevets

(11) EP 0 712 878 B1

(12) # EUROPÄISCHE PATENTSCHRIFT

(45) Veröffentlichungstag und Bekanntmachung des Hinweises auf die Patenterteilung:
**05.04.2000 Patentblatt 2000/14**

(51) Int Cl.7: **C08G 64/30**

(21) Anmeldenummer: **95117575.1**

(22) Anmeldetag: **08.11.1995**

(54) **Verfahren zur Herstellung von thermoplastischem Polycarbonat**

Process for the preparation of thermoplastic polycarbonate

Procédé de préparation de polycarbonate thermoplastique

(84) Benannte Vertragsstaaten:
**BE DE ES FR GB IT NL**

(30) Priorität: **21.11.1994 DE 4441355**

(43) Veröffentlichungstag der Anmeldung:
**22.05.1996 Patentblatt 1996/21**

(73) Patentinhaber: **BAYER AG**
**51368 Leverkusen (DE)**

(72) Erfinder:
- **Hucks, Uwe**
  **D-46519 Alpen (DE)**
- **Kühling, Steffen, Dr.**
  **D-40670 Meerbusch (DE)**
- **Fischer, Thomas, Dr.**
  **D-47809 Krefeld (DE)**
- **Zaby, Gottfried, Dr.**
  **D-51375 Leverkusen (DE)**
- **Rhiel, Franz-Ferdinand, Dr.**
  **D-41540 Dormagen (DE)**

(56) Entgegenhaltungen:
**EP-A- 0 338 085** **EP-A- 0 582 931**
**WO-A-92/04394**

- **DATABASE WPI Week 9328 Derwent Publications Ltd., London, GB; AN 93-224577 XP002015722 & JP-A-05 148 619 (RICOH KK; STANLEY ELECTRIC CO. LTD.) , 15.Juni 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 712 878 B1

## Beschreibung

Gegenstand der vorliegenden Erfindung ist ein Umesterungsverfahren zur Herstellung von lösungsmittelfreien Oligo-/Polycarbonaten, ausgehend von aromatischen Diphenolen, Kohlensäurediarylestern und gegebenenfalls Verzweigern und/oder Monophenolen sowie gegebenenfalls Katalysatoren bei Temperaturen zwischen 80°C und 400°C und Absolutdrucken von 1 000 mbar bis 0,01 mbar, das dadurch gekennzeichnet ist, daß man die aromatischen Diphenole und die Kohlensäurediarylester in der ersten Phase der Umesterung (Oligocarbonatherstellung) gasförmig umsetzt.

Die nach dem erfindungsgemäßen Verfahren hergestellten Oligo-/Polycarbonate sind lösungsmittelfrei, mit heller Eigenfarbe ausgestattet und weitgehend frei von unerwünschten Fehlstellen im Polycarbonat.

Die Herstellung von aromatischen Oligo-/Polycarbonaten nach dem Schmelzeumesterungsverfahren ist literaturbekannt und beispielsweise in Chemistry and Physics of Polycarbonates, Polymer Reviews, H. Schnell, Vol. 9, John Wiley and Sons, Inc. (1964) vorbeschrieben.

In den Literaturstellen und den dort zitierten Literaturangaben werden immer feste Edukte (aromatische Diphenole, Kohlensäurediarylester) aufgeschmolzen und zum Polycarbonat umgesetzt.

Es wurde nun überraschend gefunden, daß durch Zusammenführen des aromatischen Diphenols mit dem Kohlensäurediarylester im gasförmigen Zustand die Umsetzung schnell erreicht werden kann. Dies hat den besonderen Vorteil, daß man die Edukte direkt nach der Reinigung über eine Destillation ohne weitere Zwischenschritte in höchster Qualität einsetzen kann. Eine Isolierung und anschließendes Wiederaufschmelzen entfällt.

Für das erfindungsgemäße Verfahren geeignete Diphenole sind solche der Formel (I)

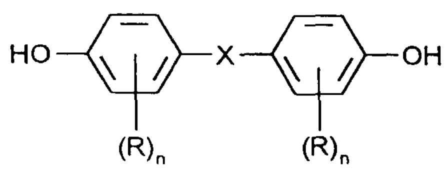

(I)

worin X = $C_1$-$C_8$-Alkyliden oder Cycloalkyliden, S oder eine Einfachbindung und R = $CH_3$, Cl oder Br und n = Null, 1 oder 2 ist.

Bevorzugte Diphenole sind z.B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die vorstehenden Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:
Phloroglucin,

4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methylbenzyl)-4-methylphenol,

2-(4-Hydroxyphenyl)-2-(2,4-dihydroxyphenyl)-propan,
Hexa-(4-(4-hydroxyphenyl-isopropyl)-phenol)-orthoterephthalsäureester,
Tetra-(4-hydroxyphenyl)-methan,
Tetra-(4-(4-hydroxyphenyl-isopropyl)-phenoxy)-methan,
1,4-Bis-(4',4''-dihydroxytriphenyl)-methyl)-benzol und insbesondere
α,α',α''-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern, können mit den Diphenolen zusammen eingesetzt oder bevorzugt zu einem späteren Zeitpunkt der Oligo-/Polykondensation zugeführt werden.

Kohlensäurediester im Sinne vorliegender Erfindung sind Di-$C_6$-$C_{18}$-Arylester, halogensubstituierte $NO_2$-substituierte Kohlensäurediester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 2 Mol, bevorzugt in 1,02 bis 1,30 Mol, besonders bevorzugt in 1,03 bis 1,15 Mol eingesetzt.

Die aromatische Dihydroxyverbindung und die Kohlensäurediester können im Sinne des erfindungsgemäßen Verfahrens für die Gasphasenreaktion verdampft werden oder bevorzugt nach dem Reinigungsprozeß (Destillation) in gasförmigen Zustand zusammengeführt werden.

Diese Gasphasenreaktion zum Oligocarbonat läuft unkatalysiert ab. Es kann aber auch vorteilhaft sein für Gasphasenreaktion zum Oligocarbonat Stickstoff- und Phosphor-Basen als Katalysatoren einzusetzen, z.B. Ammonium- und Phosphoniumkatalysatoren (s. III, IV) sowie Guanidin- und Phoshazen-Basen. Diese Katalysatoren können mit in die Gasphase gebracht werden oder können als Festbettkatalysatoren auf einem Trägermaterial angebunden sein.

Bevorzugte Katalysatoren im Sinne des erfindungsgemäßen Verfahrens für die Herstellung der Oligocarbonatstufe sind Verbindungen der allgemeinen Formel (III) und (IV)

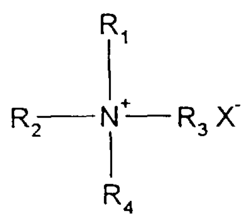

(III)

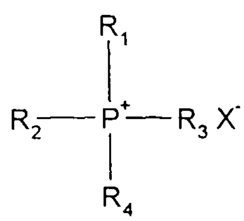

(IV)

wobei $R_{1-4}$ dieselben oder verschiedene Alkyle, Aryle oder Cycloalkyle sein können und $X^-$ ein Anion sein kann, bei dem das korrespondierende Säure-Base-Paar $H^+ + X^- \Longleftrightarrow HX$ einen $pK_B$ von < 11 besitzt.

Katalysatoren im Sinne des erfindungsgemäßen Verfahrens sind beispielsweise:

Ammoniak, Tetramethylammoniumhydroxid, Tetramethylammoniumacetat, Tetramethylammoniumfluorid, Tetramethylammoniumtetraphenylboranat, Tetraphenylphosphoniumfluorid, Tetraphenyl-phosphoniumtetraphenylboranat, Dimethyldiphenylammoniumhydroxid, Tetraethylammonium-hydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en,7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base $P_1$-t-Oct = tert.-Octyl-imino-tris-(dimethylamino)-phosphoran, Phosphazen-Base $P_1$-t-Butyl = tert.-Butyl-imino-tris-(dimethylamino)-phosphoran, BEMP = 2-tert.-Butylimino-2-diethylamino-1,3-dimethyl-perhydro-1,3-diaza-2-phosphorin.

Diese Katalysatoren werden in Mengen von $10^{-1}$ bis $10^{-8}$ Mol, bezogen auf 1 Mol Diphenol, eingesetzt. Die Katalysatoren können auch in Kombination (zwei oder mehrere) miteinander eingesetzt werden.

Festbettkatalysatoren und Trägermaterial für die o.g. Katalysatoren sind Glas, Zeolithe, Aluminiumoxide, Aktivkohlen, Metalle-/Legierungen, Keramik und polymere Träger.

Bei der unkatalysierten Reaktion ist es vorteilhaft, eine große Oberfläche für die Gasphasenreaktion bereitzustellen. Dies kann durch Überleiten des Gasgemisches über Materialien wie Glas, Zeolithe, Aktivkohlen, inerte Metalle-/Legierungen (z.B. V4A, Hastelloy) gewährleistet werden, die durch entsprechende geometrische Formen (z.B. Kugeln, Netz, Pulver, Ringe, Granulate, Pellets) eine große Oberfläche bereitstellen.

Die durch die Gasphasenreaktion hergestellten Oligocarbonate weisen mittlere Molekulargewichte $\overline{M}_w$ von 300 bis 24 000, bevorzugt 400 bis 19 000 auf, ermittelt durch Messung der rel. Lösungsviskosität in Dichlormethan oder in Mischungen gleicher Gewichtsmengen Phenol/o-Dichlorbenzol geeicht durch Lichtstreuung.

Die Temperatur zur Herstellung dieser Oligocarbonate liegt zwischen 100°C bis 350°C, bevorzugt zwischen 150°C und 280°C. Die bei der Umesterung zum Oligocarbonat entstehenden Monophenole werden durch Anlegen eines Absolutdruckes von 1 bar bis 0,5 mbar, bevorzugt < 500 mbar bis 1 mbar, entfernt. Ein niedriger Partialdruck kann aber auch durch entsprechende Mengen eines Trägergases (Inertgas wie z.B. Stickstoff, Argon, Kohlendioxid, Wasserdampf) eingestellt werden.

Die Reaktion der aromatischen Dihydroxyverbindung und des Kohlensäurediesters zum Oligocarbonat kann im Sinne des erfindungsgemäßen Verfahrens diskontinuierlich oder bevorzugt kontinuierlich durchgeführt werden. Hierzu werden die Gase der aromatischen Dihydroxyverbindung und des Kohlensäurediesters über geeignete technische Vorrichtungen gemischt (z.B. mittels einer Düse, Mischelemente, Überleiten über Materialien wie Glas, Zeolithe, Aktivkohlen, inerte Metalle-/Legierungen, die durch entsprechende Form (z.B. Kugeln, Netz, Pulver, Ringe, Granulate, Pellets) eine große Misch-Oberfläche bereitstellen) und umgesetzt. Diese Umsetzung kann beispielsweise in einem einfachen, beheizten Rohr oder einer Reaktionskolonne mit Füllungen (Glas, Zeolithe, Aktivkohlen, inerte Metalle-/Legierungen, Keramik, Katalysatoren auf Trägermaterial in entsprechenden Formel (z.B. Kugeln, Netz, Pulver, Ringe, Granulate, Pellets) erfolgen.

Die Verweilzeiten der aromatischen Dihydroxyverbindung und des Kohlensäurediesters bei der Gasphasenreaktion zum Oligocarbonat im Sinne des erfindungsgemäßen Verfahrens ist im Vergleich zu der Flüssigphasenreaktion (1 h bis 5 h) deutlich geringer; sie liegt unter 1 h, bevorzugt unter 0,5 h, besonders bevorzugt unter 15 min.

Das Oligocarbonat kann dann beispielsweise weiter umgesetzt werden durch Einleiten in Rührkessel, Dünnschichtverdampfer, Reaktionskolonnen, Schlaufenreaktoren, Wendelrohren mit Flashverdampfung, Fallfilmverdampfern, Rührkesselkaskaden, einfachen Scheibenreaktoren.

Im weiteren wird das Oligocarbonat durch weiteres Erhöhen der Temperatur auf 250 bis 400°C, bevorzugt 280°C bis 320°C, und einem Druck <100 mbar bis 0,01 mbar zum Polycarbonat geführt.

Für diesen Schritt kann es vorteilhaft sein Alkali-/Erdalkalimetallkatalysatoren zuzusetzen. Die Alkali-/Erdalkalimetallkatalysatoren werden bevorzugt in Mengen von $10^{-8}$ bis $10^{-4}$ Mol bezogen auf 1 Mol Diphenol, besonders bevorzugt in einer Konzentration von $10^{-7}$ bis $10^{-5}$ Mol eingesetzt. Es sind beispielsweise die Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate, boranate.

Die Zugabe des Alkali-/Erdalkalimetallkatalysators kann z.B. als Feststoff oder als Lösung bzw. Masterbatch in Wasser, Phenol, Oligocarbonat, Polycarbonat erfolgen.

Die Polykondensation des Oligocarbonats kann im Sinne des erfindungsgemäßen Verfahrens kontinuierlich oder diskontinuierlich beispielsweise in Rührkesseln, Dünnschichtverdampfern, Rührkesselkaskaden, Extrudern, Knetern, Scheibenreaktoren und/oder Hochviskosscheibenreaktoren durchgeführt werden.

Die aromatischen Polycarbonate des erfindungsgemäßen Verfahrens sollen mittlere Gewichtsmolmassen $\overline{M}_w$ von 18 000 bis 60 000, vorzugsweise 19 000 bis 40 000 haben, ermittelt durch Messung der rel. Lösungsviskosität in Dichlormethan oder in Mischungen gleicher Gewichtsmengen Phenol/o-Dichlorbenzol geeicht durch Lichtstreuung.

Dies wird dadurch erreicht, daß bevorzugt niedrigmolekulare Oligocarbonate durch Monophenoldestillation zu niedrigviskoseren Polycarbonaten und höhermolekulare Oligocarbonate zu höherviskosen Polycarbonate polykondensiert werden.

Die Umsetzung des Oligocarbonats zum Polycarbonat kann auch entsprechend der WO 90/7536 bzw. des EP-A 338 085 erfolgen, indem das erfindungsgemäß hergestellte Oligocarbonat kristallisiert und in der festen Phase festphasenpolykondensiert wird.

Die aromatischen Polycarbonate des erfindungsgemäßen Verfahrens sollen mittlere Gewichtsmolmassen $\overline{M}_w$ von 18 000 bis 60 000, vorzugsweise 19 000 bis 40 000, haben, ermittelt durch Messung der rel. Lösungsviskosität in Dichlormethan oder in Mischungen gleicher Gewichtsmengen Phenol/o-Dichlorbenzol, geeicht durch Lichtstreuung.

Die erfindungsgemäß hergestellten Polycarbonate haben eine helle Eigenfarbe, besitzen bevorzugt einen niedrigen OH-Endgruppengehalt von <1 200 ppm und sind hydrolyse- und thermostabil.

Zur Begrenzung der mittleren Gewichtsmolmassen $\overline{M}_w$ der Polymeren können in bekannter Weise (EP 360 578) Molmassenregler, wie beispielsweise Alkylphenol (Isooctylphenol, t-Butylphenol, Cumylphenol), in den erforderlichen Mengen eingesetzt werden.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite,-phosphate, -phosphane, niedermolekulare Carbonsäureester, Halogenverbindungen, Salze, Kreide, Quarzmehl, Glas- und Kohlenstoffasern, Säuren und Epoxide.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüberhinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylensulfid-Blöcke mit OH-Endgruppen, Polyphenylenoxid-Blöcke mit OH-Endgruppen.

Die erfindungsgemäß hergestellten Polycarbonate eignen sich für die üblichen Anwendungsgebiete, also in der Elektrotechnik, im Bausektor und im Kraftfahrzeugbau somit z.B. als Trägermaterial für Datenspeicher, für Stegplatten zur Abdeckung oder als Gehäusematerial von elektronischen Geräten.

## <u>Beispiele</u>

### Beispiel 1

In zwei ölbeheizten Vorlagen werden jeweils 1 kg Bisphenol A und 1 kg Diphenylcarbonat getrennt voneinander eingewogen und unter Stickstoff aufgeschmolzen. Auf den ölbeheizten Vorlagen sind zwei beheizte Verbindungsstücke, die in einem beheizten Glasrohr (mit Glasringen gefüllt) münden. Das Glasrohr (30 cm Länge, Durchmesser 7,5 cm) endet in einem 2 l Zweihalskolben (beheizt) mit Produktablaß und aufgesetzter Brücke. Das Bisphenol A wird auf 290°C und das Diphenylcarbonat auf 250°C aufgeheizt. Das beheizte Glasrohr wird auf 230°C und der 2 l Zweihalskolben auf 210°C beheizt. Nun wird der Druck kontinuierlich bis auf 40 mbar gesenkt, so daß das Bisphenol A und das Diphenylcarbonat gleichmäßig sieden; das gleichmäßige sieden muß gegebenenfalls durch Nachregulieren der Edukttemperaturen justiert werden. In dem beheizten Glasrohr findet dann die Oligocarbonatsynthese statt, so daß sich in dem 2 l Zweihalskolben das Oligocarbonat abscheidet. Das abgespaltene Phenol wird kontinuierlich über die Brücke abgezogen. Das Oligocarbonat mit einer rel. Lösungsviskosität von 1,038 (Dichlormethan, 25°C, 5 g/l) wird in einen Kolben mit Rührer, Innenthermometer und Vigreuxkolonne (30 cm, verspiegelt) und Brücke ausgetragen und es wird gleichzeitig die Temperatur innerhalb einer Stunde bis auf 250°C gesteigert und das Vakuum auf 10 mbar verbessert. Durch weiteres Absenken des Vakuums auf 0,5 mbar und Temperaturerhöhung auf 280°C wird die Polykondensation innerhalb von 1 Stunde erreicht. Man erhält ein lösungsmittelfreies, farbhelles Polycarbonat mit einer rel. Lösungsviskosität von 1,230 (Dichlormethan, 25°C, 5 g/l). Der phenolische OH-Wert des Polycarbonats beträgt 510 ppm.

### Beispiel 2

Wie Beispiel 1, nur werden anstatt der Glasringe V4a Netzringe eingesetzt. Man erhält ein Oligocarbonat mit einer rel. Lösungsviskosität von 1,045 (Dichlormethan, 25°C, 5 g/l), aus dem ein farbhelles, lösungsmittelfreies Polycarbonat mit einer rel. Lösungsviskosität von 1,254 (Dichlormethan, 25°C, 5 g/l) hergestellt wird. Der phenolische OH-Wert des Polycarbonats beträgt 360 ppm.

### Beispiel 3

Wie Beispiel 1, nur es wird dem Oligocarbonat 0,0001 g NaOH ($5*10^{-4}$ Mol-%), bezogen auf Bisphenol A, als 1 %ige wäßrige Lösung zugegeben. Man erhält dann ein farbhelles, lösungsmittelfreies Polycarbonat mit einer rel. Lösungsviskosität von 1,299 (Dichlormethan, 25°C, 5 g/l). Der phenolische OH-Wert des Polycarbonats beträgt 280 ppm.

## Patentansprüche

1. Verfahren zur Herstellung von thermoplastischen lösungsmittelfreien Oligo/Polycarbonaten, dadurch gekennzeichnet, daß aromatischen Diphenole und Kohlensäurediarylester gasförmig zusammengeführt und umgesetzt werden.

2. Verfahren nach Anspruch 1, dadurch gekennzeichnet, daß bei Temperaturen zwischen 80°C und 400°C und Absolutdrucken von 1 000 mbar bis 0,01 mbar gearbeitet wird.

3. Verfahren nach Anspruch 1 und 2, dadurch gekennzeichnet, daß das Diphenol Bisphenol A ist und der Kohlensäurediarylester Diphenylcarbonat ist.

4. Verfahren nach Anspruch 1 bis 3, dadurch gekennzeichnet, daß die Gasphasenreaktion unter Mithilfe von basischen oder neutralen Katalysatoren durchgeführt wird.

5. Verfahren nach Anspruch 1 bis 4, dadurch gekennzeichnet, daß die durch die Gasphasenreaktion hergestellten Oligocarbonate mittlere Molekulargewichte $\overline{M}_w$ von 300 bis 24 000 aufweisen.

6. Verfahren nach Anspruch 1 bis 5, dadurch gekennzeichnet, daß die Verweilzeit für die Oligocarbonatherstellung <1 h liegt.

7. Verfahren nach Anspruch 4, dadurch gekennzeichnet, daß der Katalysator ein Festbettkatalysator ist.

## Claims

1. A process for the production of thermoplastic, solvent-free oligo/polycarbonates, characterised in that aromatic diphenols and diaryl esters of carbonic acid are brought together and reacted in gaseous form.

2. A process according to claim 1, characterised in that temperatures between 80 C and 400 C and absolute pressures from 1000 mbar to 0.01 mbar are employed.

3. A process according to claims 1 and 2, characterised in that the diphenol is bisphenol A and the diaryl ester of carbonic acid is diphenyl carbonate.

4. A process according to claims 1 to 3, characterised in that the gas phase reaction is carried out with the assistance of basic or neutral catalysts.

5. A process according to claims 1 to 4, characterised in that the oligocarbonates which are produced by the gas phase reaction have average molecular weights $\overline{M}$w from 300 to 24,000.

6. A process according to claims 1 to 5, characterised in that the residence time for the production of oligocarbonate is <1 hour.

7. A process according to claim 4, characterised in that the catalyst is a fixed bed catalyst.

## Revendications

1. Procédé pour la préparation d'oligo/polycarbonates thermoplastiques sans solvant, caractérisé en ce que l'on met en contact entre eux et on fait réagir des diphénols aromatiques et des carbonates de diaryle à l'état gazeux.

2. Procédé selon la revendication 1, caractérisé en ce que l'on opère à des températures de 80 à 400°C sous des pressions absolues de 1 000 mbar à 0,01 mbar.

3. Procédé selon les revendications 1 et 2, caractérisé en ce que diphénol est le bisphénol A et le carbonate de diaryle le carbonate de diphényle.

4. Procédé selon les revendications 1 à 3, caractérisé en ce que la réaction en phase gazeuse est réalisée avec utilisation conjointe de catalyseurs basiques ou neutres.

5. Procédé selon les revendications 1 à 4, caractérisé en ce que les oligocarbonates préparés par réaction en phase gazeuse ont des poids moléculaires moyens $\overline{M}_w$ de 300 à 24 000.

6. Procédé selon les revendications 1 et 5, caractérisé en ce que la durée de réaction pour préparation de l'oligocarbonate est inférieure à 1 h.

7. Procédé selon la revendication 4, caractérisé en ce que le catalyseur est à l'état de lit fixe.